# EUROPÄISCHE PATENTSCHRIFT

(11) **EP 1 841 164 B1**
(45) Veröffentlichungstag und Bekanntmachung des Hinweises auf die Patenterteilung: **15.12.2010**
(21) Anmeldenummer: 06111914.5
(22) Anmeldetag: 29.03.2006
(51) Int. Cl.: H04L 29/06, H04M 7/00, H04L 29/12

(54) **System, Verfahren und Verbindungseinheit zum dynamischen Konfigurieren von NAT-Routern**
System, process and connection unit for dynamically configuring NAT routers
Système, procédé et dispositif de connexion pour configurer des routeurs NAT

(43) Veröffentlichungstag der Anmeldung: 03.10.2007
(73) Patentinhaber: Swisscom AG, 3050 Bern (CH)
(72) Erfinder: Semling, Michael, 5413, Birmenstorf (CH)
(74) Vertreter: Scheuzger, Beat Otto

(56) Entgegenhaltungen:
- EP-A- 1 545 096
- ROSENBERG J ET AL: "Nat. and firewall scenarios and solutions for SIP" INTERNET ENGINEERING TASK FORCE INTERNET DRAFT, 24. Juni 2002 (2002-06-24), Seiten 1-54, XP002962592
- SCHULZRINNE H ET AL: "INTERNET TELEPHONY: ARCHITECTURE AND PROTOCOLS - AN IETF PERSPECTIVE" COMPUTER NETWORKS AND ISDN SYSTEMS, NORTH HOLLAND PUBLISHING. AMSTERDAM, NL, Bd. 31, Nr. 3, 11. Februar 1999 (1999-02-11), Seiten 237-255, XP000700321 ISSN: 0169-7552

## Beschreibung

### Technisches Gebiet

Die vorliegende Erfindung betrifft ein System und ein Verfahren zum dynamischen Konfigurieren von NAT-Routern. Die Erfindung betrifft insbesondere ein System und ein Verfahren zum Konfigurieren von NAT-Routern, wobei zur gemeinsamen Kommunikation ein erster respektive ein zweiter IP-Node über einen ersten respektive über einen zweiten NAT-Router auf ein IP-Netzwerk zugreifen.

### Stand der Technik

NAT (kurz für Network Address Translation) ist ein Verfahren in Computernetzwerken, bei welchem eine IP-Adresse in einem Datenpaket durch eine andere ersetzt wird. Insbesondere wird dieses Verfahren häufig dazu benutzt, private IP-Adressen auf öffentliche IP-Adressen abzubilden, was aus verschiedenen Gründen notwendig sein kann. Beispielsweise werden öffentliche IP-Adressen immer knapper, so dass in einem internen bzw. privaten Netz oft keine öffentlichen, sondern private IP-Adressen eingesetzt werden. Damit die Kommunikation mit dem Internet trotzdem möglich ist, müssen die internen, privaten Adressen am Gateway zum Internet in öffentliche Adressen übersetzt werden. Ausserdem dient NAT der Datensicherheit, weil die interne Struktur des Netzes nach aussen hin verborgen bleibt. Der NAT-Standard wurde 1994 von der IETF (Internet Engineering Task Force) als Request for Comments (RFC) 1631 veröffentlicht. Dieses Verfahren wird üblicherweise an einem Übergang zwischen zwei Netzen durchgeführt. Ein NAT-Gerät kann daher grundsätzlich ein Router, eine Firewall, eine Kombination der beiden oder ein anderes spezialisiertes Gerät sein.

Unter dem Begriff NAT werden allerdings zwei verschiedene Verfahren zusammengefasst. Diese beiden Verfahren sind Source NAT (auch SNAT genannt), bei dem jeweils die Absender- oder Quell-IP-Adresse von ausgehenden Datenpaketen ersetzt wird, und Destination NAT (oder DNAT), bei dem jeweils die Ziel-IP-Adresse von eingehenden Datenpaketen abgeändert wird.

Normalerweise wird beim Source NAT ein so genanntes Hiding NAT durchgeführt. Bei Hiding NAT tritt der NAT-Router stellvertretend für alle Stationen in seinem lokalen Netzwerk (LAN) auf, da die externe IP-Adresse des NAT-Routers in jedes ausgehende Datenpaket als Absender-Adresse eingetragen wird. Es werden also mehrere verschiedene Absender-IP-Adressen in eine gleiche externe Absender-IP-Adresse übersetzt. Bei diesem Verfahren werden ausser den IP-Adressen jeweils auch die Port-Nummern umgeschrieben. Daher spricht man in diesem Fall auch von PAT (für Port Address Translation), NAPT (für Network Address Port Translation) oder Masquerading.

Die Konsequenz des Masquerading-Verfahrens ist es, dass externe Computer keine Verbindung zu Stationen im lokalen Netzwerk aufbauen können. Zum Teil handelt es sich dabei um eine gewollte Schutzfunktion vor unaufgefordertem und unsicherem Datenverkehr. Jedoch liegt der Nachteil dieser Lösung darin, dass Computer im lokalen Netzwerk für alle Stationen ausserhalb dieses Netzwerks nicht als Server dienen können. Eine Lösung dieses Problems wird mit Port Forwarding bzw. mit DNAT vorgeschlagen.

Ein NAT-Router am Übergang von einem lokalen Netzwerk (LAN) zum Internet oder einem anderen öffentlichen Netzwerk (WAN) wartet in diesem Fall auf Datenpakete auf einem bestimmten Port. Wenn Pakete an diesem Port eintreffen, werden sie an einen bestimmten Computer und gegebenenfalls an einen anderen Port im internen Netzwerk weitergeleitet. Alle Datenpakete von diesem bestimmten Computer und Port werden, wenn sie zu einer eingehenden Verbindung gehören, per NAT so verändert, dass es im externen Netz den Anschein hat, der Router würde die Pakete versenden.

Durch Port Forwarding wird es Rechnern innerhalb eines LANs welche von einem externen Netz nicht direkt erreichbar sind somit möglich, auch ausserhalb dieses Netzes als Server zu fungieren, da diese somit über einen festgelegten Port eindeutig ansprechbar gemacht werden. Für alle Rechner im externen Netz sieht es so aus, als ob der NAT-Router den Serverdienst anbietet. Port Forwarding erlaubt es, Verbindungen über beliebige Ports zu Stationen innerhalb eines lokalen Netzwerks weiterzuleiten oder auch Verbindungen zu initiieren. In diesem Sinne werden die eingehenden Datenpakete hierbei per Destination NAT und die ausgehenden Pakete per Source NAT maskiert, um sie an den anderen Rechner weiterzuleiten bzw. den Anschein zu erwecken, die ausgehenden Pakete kämen von der Station, welche das Port Forwarding betreibt.

Beispielsweise steht für das lokale Netz 192.168.0.0/24 die öffentliche IP-Adresse 221.0.0.2 zur Verfügung. In diesem Fall sehen die ausgehenden Datenpakete folgendermassen aus:

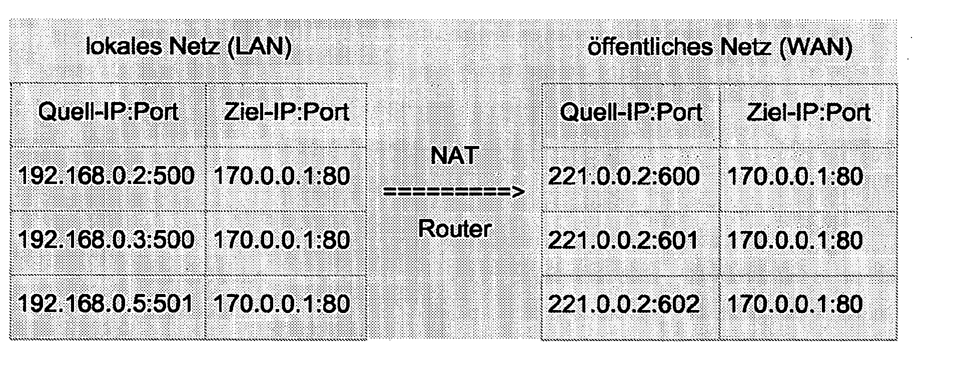

Die verschiedenen Absender-IP-Adressen werden durch eine einzige öffentliche IP-Adresse ersetzt. Die internen Port-Nummern werden andererseits durch eindeutige öffentliche Port-Nummern ersetzt. In einer Tabelle speichert der Router die Zuordnung der internen Absender-IP-Adressen und entsprechenden Port-Nummern zu den öffentlichen Port-Nummern der ausgehenden Pakete:
192.168.0.2:500 <=> 600
192.168.0.3:500 <=> 601
192.168.0.5:501 <=> 602

Also sehen die Datenpakete bei den eingehenden Kommunikationsverbindungen folgendermassen aus:

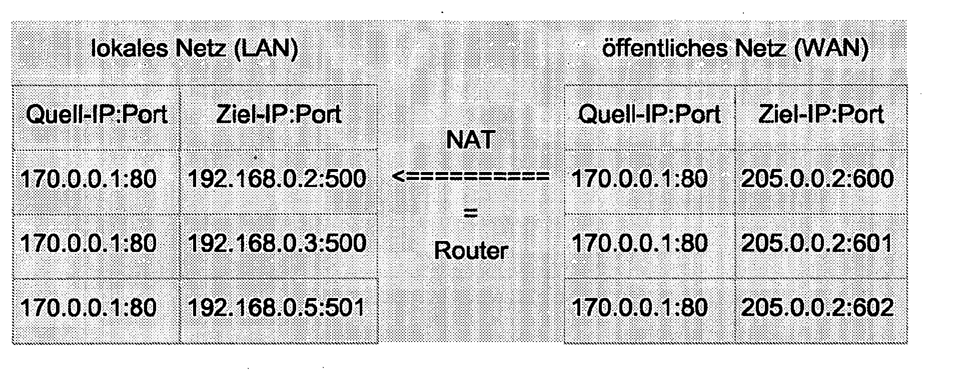

Anhand der Port-Nummer der Ziel-IP-Adresse und des entsprechenden Tabelleneintrags kann bei jedem eingehenden Paket festgestellt werden, welcher Computer die Pakete angefordert hatte. Dadurch kann der Router einerseits die Ziel-IP-Adresse durch die ursprüngliche Absender-IP-Adresse und die öffentliche Port-Nummer durch die ursprüngliche interne Port-Nummer ersetzen.

Diese Verfahren haben jedoch den Nachteil, dass gewisse Dienste trotz einer grundsätzlichen Erreichbarkeit aller Stationen im lokalen Netzwerk nicht unterstützt werden können. Dieses Problem wirkt sich insbesondere bei den Diensten negativ aus, bei welchen eine dynamische Zuweisung von Port-Nummern für eine richtige Funktionsweise notwendig ist. Ein Beispiel eines solchen Dienstes ist die Internet-Telefonie (VoIP) mithilfe des Session Initiation Protocols (SIP). SIP (standardisiert von der IETF als RFC 3261) ist grundsätzlich nur ein Signalisierungsprotokoll zum Aufbau einer Verbindung zwischen zwei oder mehreren Internet-Telefongeräten. Zur Übertragung der Sprachdaten greift SIP jedoch auf andere Protokolle, beispielsweise auf RTP (Realtime Transport Protocol - IETF RFC 3550) zurück. Dabei werden die dafür verwendeten UDP-Port-Nummem dynamisch vergeben. Also ist die Verwendung von SIP in Verbindung mit NAT praktisch unmöglich, da die meisten NAT-Geräte die dynamisch vergebenen Ports nicht der Signalisierungsverbindung zuordnen können. Dadurch kann einer der wesentlichen Vorteile von Internet-Telefonie, nämlich der Zugang zu einem sehr grossen Publikum, nur teilweise ausgenützt werden. Dieser Nachteil erscheint um so wichtiger, da ja Internet-Telefonie in der Zukunft eine immer wichtigere Rolle spielen wird, wobei viele Benutzer sich in lokalen Netzwerken aufhalten und dadurch keinen oder nur schlechten Zugang zu Benutzern ausserhalb des eigenen Netzwerks erhalten können, womit wiederum Ihre Erwartungen bezüglich Qualität oder Nutzen der Internet-Telefonie nicht erreicht werden.

Ein weiterer Nachteil dieser Verfahren resultiert aus der immer wichtigeren Mobilität von Benutzern, bei welcher der Benutzer oft nicht nur den direkten Zugangsknoten, sondern auch die Zugangstechnologie in kürzester Zeit wechselt. Beispielsweise kann heute der Benutzer sehr schnell zwischen WLAN (IEEE 802.11x), GPRS (General Packet Radio Service), EDGE (Enhanced Data Rate for GSM Evolution), UMTS (Universal Mobile Telecommunication System) oder ähnlichen Zugangstechnologien wechseln. Gewisse Geräte erlauben sogar einen nahtlosen (seamless) Wechsel zwischen diesen Technologien, so dass der Benutzer dies nicht einmal bemerkt. Die Konsequenz dieser Technologiewechsel ist in der Regel eine entsprechende dynamische Änderung der IP-Adresse und der Port-Nummer. Um eine ungestörte Kommunikation zwischen der mobilen Station des Benutzers und einer anderen Station zu ermöglichen, müssen daher proprietäre Lösungen bereitgestellt werden, welche die Benutzung der angebotenen Dienste zusätzlich komplizieren und verteuern.

In der Schrift EP 1 545 096 werden ein Verfahren und ein System offenbart, dank welchen VoIP-Dienste auch mit Endgeräten angeboten werden, welche sich in einem privaten Netzwerk (d.h. hinter einem NAT-Router) befinden. Dazu wird eine Zentraleinheit eingeführt, bei welcher sich alle Endgeräte anmelden. Diese Zentraleinheit hat eine Tabelle, in welcher sie jeweils die IP-Adressen und die Port-Nummern jedes Endgeräts mit den entsprechenden Telefonnummern speichert. Ein Verbindungs-Request von einem Quelle-Endgerät wird an die Zentraleinheit gesendet und dort dank den gespeicherten Informationen an die richtige IP-Adresse und die entsprechende Port-Nummer des gewünschten Destinations-Engeräts gesendet. Nach dem entsprechenden Austausch von Bestätigungsnachrichten kann die VoIP-Verbindung zwischen den beiden Endgeräten hergestellt werden. Allerdings bietet dieses Dokument keine Lösung für die Sicherheitsprobleme, oder aber für das Angebot verschiedenen Dienstleistungen durch dasselbe Endgerät.

### Offenbarung der Erfindung

Es ist eine Aufgabe der vorliegenden Erfindung, ein neues Verfahren und ein neues System zum dynamischen Konfigurieren von NAT-Routern vorzuschlagen, welche nicht die Nachteile des Standes der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass in einem Verfahren zum dynamischen Konfigurieren eines zweiten NAT-Routers, wobei zur gemeinsamen Kommunikation ein erster respektive ein zweiter IP-Node über einen ersten respektive über einen zweiten NAT-Router auf ein IP-Netzwerk zugreifen, und in welchem sich der zweite IP-Node mittels eines Registrierungs-Requests bei einer Zentraleinheit registriert, wobei in einer Lookup-Table der Zentraleinheit die dem zweiten IP-Node vom zweiten NAT-Router zugeordnete IP-Nummer und Port-Nummer abgespeichert wird, der erste IP-Node einen Verbindungs-Request, bestehend aus mindestens der dem zweiten IP-Node vom zweiten NAT-Router zugeordneten IP-Nummer und aus einer Servicekennzeichnung, an die Zentraleinheit übermittelt, die Zentraleinheit mittels der Lookup-Table aus der übermittelten IP-Nummer die dem zweiten IP-Node zugeordnete Port-Nummer ermittelt, die Zentraleinheit mindestens die Servicekennzeichnung an die dem zweiten IP-Node vom zweiten NAT-Router zugeordnete IP-Nummer/Port-Nummer und somit an den zweiten IP-Node übermittelt, und mittels eines Konfigurationsmoduls des zweiten IP-Nodes ein der Servicekennzeichnung zugeordneter Port des zweiten NAT-Routers für die Übermittlung von IP-Paketen an einen Port des zweiten IP-Nodes konfiguriert wird. Der Vorteil dieser Erfindung liegt insbesondere darin, dass zwischen IP-Nodes, welche sich beide hinter den NAT-Routern befinden, nun auch dynamische Dienste angeboten werden können. Auch kann eine kontinuierliche Kommunikationsverbindung zwischen solchen IP-Nodes trotz einer mobilitätsbedingten Änderung der IP-Nummer gewährleistet werden.

In einer Ausführungsvariante wird die Konfiguration des Ports des zweiten NAT-Routers mittels der Übermittlung einer Meldung vom zweiten IP-Node an die Zentraleinheit und der Übermittlung einer Meldung von der Zentraleinheit an den ersten IP-Node bestätigt. Diese Ausführungsvariante hat unter anderem den Vorteil, dass die Rückinformation über die erfolgte Konfiguration denselben Weg nimmt, wie der Verbindungs-Request, wodurch die bestehende Verbindung wieder verwendet werden kann. Auch können für beide Kommunikationsrichtungen bestehende Sicherheits- und/oder Registrierungsmechanismen benützt werden, da die Daten vom ersten zum zweiten IP-Node und umgekehrt grundsätzlich über denselben Kommunikationskanal übermittelt werden können.

In einer anderen Ausführungsvariante übermittelt die Zentraleinheit zusammen mit der Servicekennzeichnung die dem ersten IP-Node vom ersten NAT-Router zugeordnete IP-Nummer/Port-Nummer an den zweiten IP-Node, wobei die Konfiguration des Ports des zweiten NAT-Routers mittels der Übermittlung einer Meldung vom zweiten IP-Node an den ersten IP-Node bestätigt wird. Diese Ausführungsvariante hat unter anderem den Vorteil, dass die Rückinformation nicht über die Zentraleinheit, sondern direkt vom zweiten IP-Node zum ersten IP-Node geleitet wird, womit die Belastung der Zentraleinheit wesentlich vermindert werden kann. Eine zu hohe Belastung der Zentraleinheit könnte nämlich zu Kommunikations- oder Rechenengpässen führen, was in einer wesentlich niedrigeren Dienstqualität resultieren würde.

In einer weiteren Ausführungsvariante löst der zweite IP-Node bei der Konfiguration des Ports des zweiten NAT-Routers eine analoge Konfiguration eines Ports des ersten NAT-Routers aus. Diese Ausführungsvariante hat insbesondere den Vorteil, dass dadurch auch symmetrische Dienste angeboten werden können, ohne die oben beschriebenen Vorteile zu verlieren. Insbesondere vorteilhaft ist diese Lösung für Dienste wie zum Beispiel SIP-basierte VoIP (Voice over IP), bei welcher beide Kommunikationsteilnehmer sowohl als Sender als auch als Empfänger von Daten auftraten.

In einer wieder anderen Ausführungsvariante wird der Registrierungs-Request des ersten IP-Nodes respektive des zweiten IP-Nodes zu bestimmbaren Zeitpunkten oder nach Ablauf eines bestimmbaren Zeitintervalls wiederholt. Der Vorteil dieser Ausführungsvariante liegt insbesondere darin, dass einerseits die aktuellen Verbindungsdaten für jeden IP-Node bei der Zentraleinheit gespeichert werden. Dadurch können stets alle Verbindungen fehlerlos hergestellt werden. Ausserdem können durch eine wiederholte Registrierung nur Daten von denjenigen IP-Nodes bei der Zentraleinheit gespeichert werden, welche auch tatsächlich an einer Kommunikation interessiert sind. Dadurch kann die Lookup-Table der Zentraleinheit von unnötigen Einträgen befreit werden, was sich in einer grösseren Effizienz und einem kleineren Ressourcen-Verbrauch niederschlägt.

In einer anderen Ausführungsvariante werden statt der dem ersten respektive dem zweiten IP-Node zugeordneten IP-Nummer Einträge eines DNS-Servers verwendet oder in einem dynamischen DNS-Server abgespeichert. Diese Ausführungsvariante hat unter anderem den Vorteil, dass der Dienst auf bestehender Internet-Infrastuktur aufbauen kann. Einzelne IP-Nodes müssen nicht direkt die IP-Nummer der übrigen IP-Nodes kennen, sondern können sich diese auch von einem entsprechenden DNS-Server holen. Dadurch können mehrere Clients bzw. Server hinter einem NAT auch die gleichen Dienste betreiben. Die Verwechslungsgefahr oder andere ähnliche Probleme können hiermit eliminiert werden. Diese DNS-Server können auch dynamisch sein und gegebenenfalls in der Zentraleinheit integriert oder mit ihr direkt verbunden sein.

In einer weiteren Ausführungsvariante wird bei der Registrierung des ersten respektive des zweiten IP-Nodes ein Authentifizierungsverfahren verwendet. Diese Ausführungsvariante hat unter anderem den Vorteil, dass nur diejenigen IP-Nodes den Zugang zur Zentraleinheit und zum angebotenen Dienst erhalten können, die einen Authentifizierungsvorgang erfolgreich abgeschlossen haben. Mittels der Authentifizierung können die zugelassenen IP-Nodes von den nicht zugelassenen IP-Nodes getrennt werden, womit die Kommunikationssicherheit wesentlich erhöht werden kann.

In einer weiteren Ausführungsvariante werden bei der Registrierung des ersten respektive des zweiten IP-Nodes ein Verschlüsselungsverfahren verwendet. Diese Ausführungsvariante hat unter anderem den Vorteil, dass die Kommunikation zwischen den einzelnen IP-Nodes und der Zentraleinheit zusätzlich gesichert wird, womit die Möglichkeit für Missbrauch oder Identitätsklau stark reduziert wird.

In einer anderen Ausführungsvariante werden bei der Kommunikation zwischen dem NAT-Router und der Zentraleinheit Authentifizierungs- und/oder Verschlüsselungs-Verfahren verwendet. Diese Ausführungsvariante hat unter anderem den Vorteil, dass die Kommunikation zwischen den NAT-Routern und der Zentraleinheit weiter gesichert wird, wodurch eine weitere Reduktion der unberechtigten Dienstzugriffe und/oder Abhörattacken erreicht werden kann.

In einer wieder anderen Ausführungsvariante wird zwischen dem ersten IP-Node und dem zweiten IP-Node eine VoIP-Verbindung oder eine Instant Messaging-Verbindung erstellt wird. Diese Ausführungsvariante hat unter anderem den Vorteil, dass eine VoIP-Verbindung auch zwischen Clients aufgebaut werden kann, welche normalerweise gar nicht oder nur durch den Einsatz von komplett proprietären Lösungen möglich ist. VoIP-Verbindung ermöglicht die Übertragung von Sprache und/oder Bilder über die Datenverbindung, was eine Vereinfachung der Infrastruktur und/oder Kostenreduktion zur Folge haben kann.

An dieser Stelle soll festgehalten werden, dass sich die vorliegende Erfindung neben dem erfindungsgemässen Verfahren auch auf ein System zur Ausführung dieses Verfahrens bezieht.

### Kurze Beschreibung der Zeichnungen

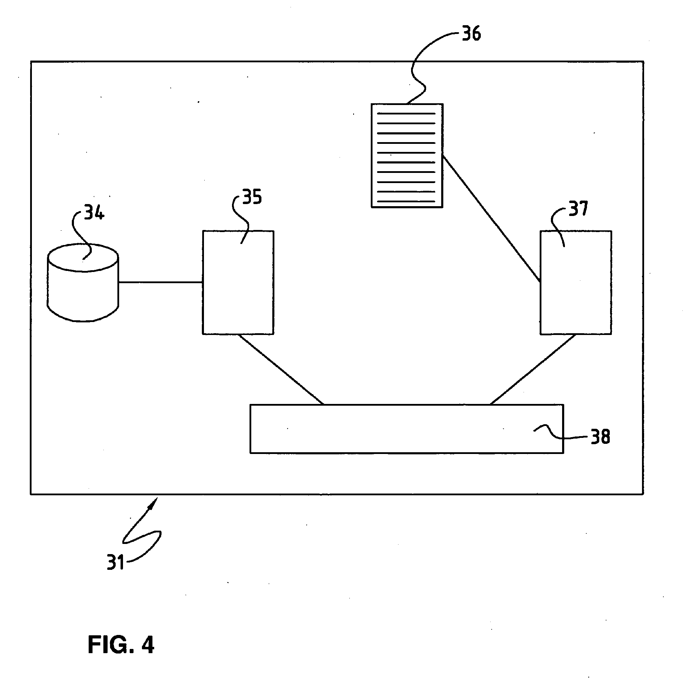

Nachfolgend wird eine Ausführung der vorliegenden Erfindung anhand eines Beispieles beschrieben. Das Beispiel der Ausführung wird durch die folgenden beigelegten Figuren 1 bis 4 illustriert:
Figur 1 zeigt ein schematisches Diagramm eines Kommunikationssystems des Standes der Technik, in welchem mehrere IP-Nodes eines lokalen Netzwerks über einen SNAT-Router auf das Internet und IP-Nodes ausserhalb des lokalen Netzwerks zugreifen.
Figur 2 zeigt ein schematisches Diagramm eines Kommunikationssystems des Standes der Technik, in welchem mehrere IP-Nodes ausserhalb eines lokalen Netzwerks über einen DNAT-Router auf IP-Nodes im lokalen Netzwerk zugreifen.
Figur 3 zeigt ein schematisches Diagramm eines Kommunikationssystems zum dynamischen Konfigurieren von NAT-Routern gemäss der Erfindung, in welchem ein erster respektive ein zweiter IP-Node über einen ersten respektive über einen zweiten NAT-Router auf ein IP-Netzwerk zugreifen.
Figur 4 zeigt ein Blockdiagramm, welches schematisch eine Vermittlungseinheit zum dynamischen Konfigurieren von NAT-Routern gemäss der Erfindung darstellt.

### Ausführungsformen der Erfindung

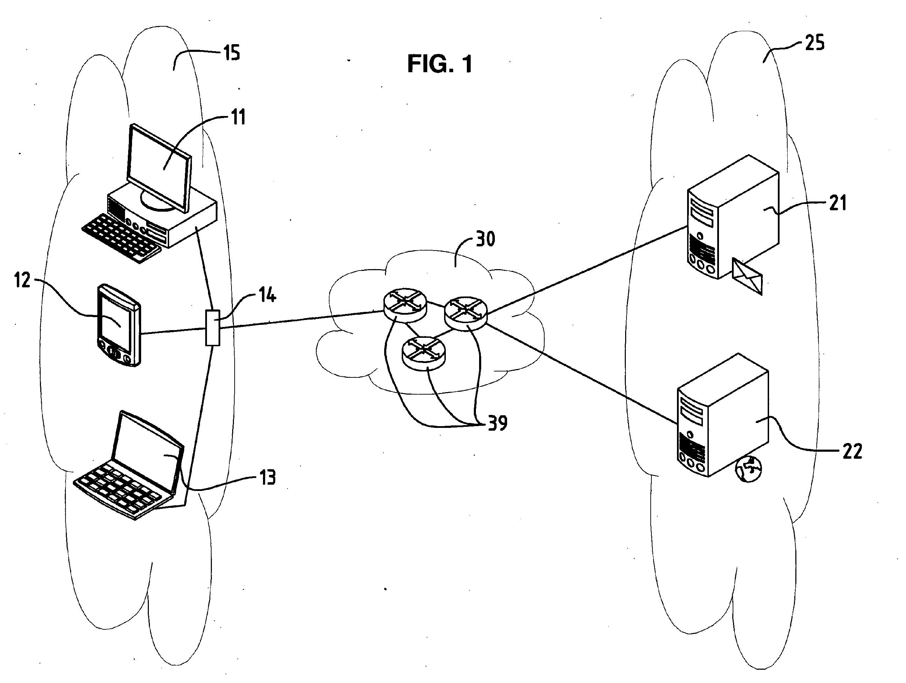

Figur 1 illustriert ein Kommunikationssystem des Standes der Technik, in welchem mehrere IP-Nodes eines lokalen Netzwerks über einen SNAT-Router einerseits auf das Internet und andererseits auf IP-Nodes ausserhalb des lokalen Netzwerks zugreifen können. In der Figur 1 bezeichnet das Bezugszeichen 15 ein lokales Netzwerk oder Local Area Network (LAN), beispielsweise ein Festnetz (Ethernet, Token Ring usw.) oder ein zelluläres Mobilfunknetz, wie zum Beispiel ein WLAN (Wireless Local Area Network), ein Bluetooth-, ein GPRS- (General Packet Radio Services), ein EDGE- (Enhanced Data Rates for GSM Evolution) oder ein UMTS-Netz (Universal Mobile Telecommunications System). Auch sind beim lokalen Netzwerk 15 satellitenbasierte Mobilfunknetze denkbar. Das lokale Netzwerk 15 kann verschiedene IP-Nodes 11, 12, 13 umfassen. In der Figur 1 bezieht sich das Bezugszeichen 11 auf einen Desktop-Personal Computer (PC), das Bezugszeichen 12 auf einen Personal Digital Assistant (PDA) oder Handheld-Computer und das Bezugszeichen 13 auf einen tragbaren Computer, auch Laptop oder Notebook genannt. Grundsätzlich sind jedoch unter einem IP-Node 11, 12, 13 unter anderem alle möglichen so genannten Customer Premise Equipment (CPE) zu verstehen, die zur Benutzung an verschiedenen Netzwerkstandorten und/oder verschiedenen Netzwerken vorgesehen sind.

Beim lokalen Netzwerk 15 handelt es sich um ein so genanntes privates Netzwerk. In diesem privaten Netzwerk können die angeschlossenen IP-Nodes 11, 12, 13 untereinander Informationen austauschen, ohne dass diese Informationen öffentlich, also ausserhalb vom lokalen Netzwerk, zugänglich sind. Ein solches privates Netzwerk muss über Eigenschaften verfügen, welche den privaten Charakter der ausgetauschten Informationen auf dem Transportweg sicherstellt und insbesondere vom Zugriff Dritter schützt. Das lokale Netzwerk 15 umfasst zu diesem Zweck einen NAT-Router 14, welcher über ein Interface mit dem öffentlichen Netzwerk oder Wide Area Network (WAN) 30 und den verschiedenen Internet-Routern und/oder anderen Infrastrukturgeräten 39 und somit mit IP-Nodes 21, 22 ausserhalb des lokalen Netzwerks 15 verbunden ist. Der NAT-Router 14 verfügt über geeignete Schnittstellen zum Anschluss von IP-Nodes 11, 12, 13 gemäss dem Internet Protokoll (IP).

Beim Zugriff von einem IP-Node 11, 12, 13 des lokalen Netzwerks 15 auf das Internet oder einen weiteren IP-Node 21, 22 ausserhalb des lokalen Netzwerks 15 betreibt der SNAT-Router 14 das Masquerading. Hierbei tritt der SNAT-Router 14 stellvertretend für alle IP-Nodes 11, 12, 13 in seinem lokalen Netzwerk 15 ein, indem in jedem ausgehenden Datenpaket die externe IP-Adresse des NAT-Routers 14 als Absender-Adresse eingetragen wird. Folglich werden verschiedene Absender-IP-Adressen von mehreren IP-Nodes 11, 12, 13 in eine gleiche externe Absender-IP-Adresse umgewandelt.

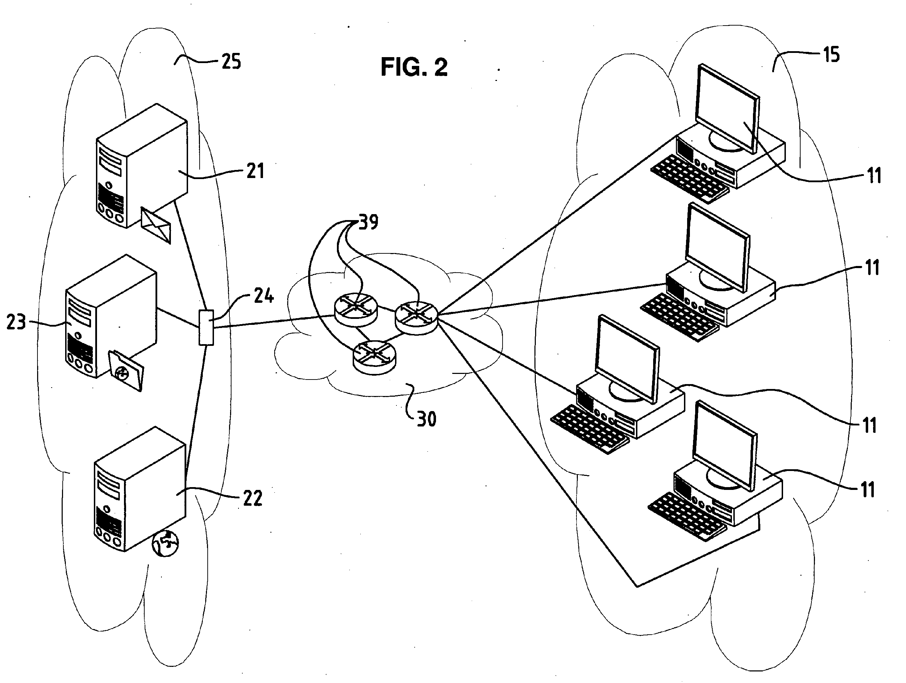

Figur 2 illustriert ein anderes Kommunikationssystem des Standes der Technik, in welchem verschiedene IP-Nodes auf mehrere IP-Nodes innerhalb eines lokalen Netzwerks über einen DNAT-Router zugreifen können. In der Figur 2 bezeichnet das Bezugszeichen 25 ein lokales Netzwerk oder Local Area Network (LAN), beispielsweise ein Festnetz (Ethernet, Token Ring, usw.) oder ein zelluläres Mobilfunknetz, wie zum Beispiel ein WLAN (Wireless Local Area Network), ein Bluetooth-, ein GPRS- (General Packet Radio Services), ein EDGE- (Enhanced Data Rates for GSM Evolution) oder ein UMTS-Netz (Universal Mobile Telecommunications System). Beim lokalen Netzwerk 25 sind ebenfalls satellitenbasierte Mobilfunknetze denkbar. Das lokale Netzwerk 25 kann ebenfalls verschiedene IP-Nodes 21, 22, 23 umfassen. Insbesondere können von den IP-Nodes 21, 22, 23 Server-Dienste angeboten werden. In der Figur 2 bezieht sich das Bezugszeichen 21 auf einen Mail-Server, das Bezugszeichen 22 auf einen File Transfer-Server (FTP-Server) und das Bezugszeichen 23 auf einen Web-Server. Grundsätzlich sind jedoch unter einem IP-Node 21, 22, 23 beliebige IP-Nodes zu verstehen, welche entweder Server- und/oder Client-Anwendungen ausführen können.

Beim lokalen Netzwerk 25 handelt es sich auch um ein so genanntes privates Netzwerk. In diesem privaten Netzwerk können die angeschlossenen IP-Nodes 21, 22, 23 untereinander Informationen austauschen, ohne dass diese Informationen öffentlich, also ausserhalb vom lokalen Netzwerk, zugänglich sind. Ein solches privates Netzwerk muss über Eigenschaften verfügen, welche den privaten Charakter der ausgetauschten Informationen auf dem Transportweg sicherstellt und insbesondere vom Zugriff Dritter schützt. Das lokale Netzwerk 25 umfasst zu diesem Zweck einen NAT-Router 24, welcher über ein Interface mit dem öffentlichen Netzwerk oder Wide Area Network (WAN) 30 und den verschiedenen Internet-Routern und/oder anderen Infrastrukturgeräten 39 und somit mit IP-Nodes 11 ausserhalb des lokalen Netzwerks 25 verbunden ist. Der NAT-Router 24 verfügt über geeignete Schnittstellen zum Anschluss von IP-Nodes 21, 22, 23 gemäss dem Internet Protokoll (IP).

Beim Zugriff von einem IP-Node 11 ausserhalb des lokalen Netzwerks 25 auf einen IP-Node 21, 22, 23 innerhalb des lokalen Netzwerks 25 betreibt der DNAT-Router 24 das Port Forwarding. Hierbei tritt der DNAT-Router 24 stellvertretend für die IP-Nodes 21, 22, 23 in seinem lokalen Netzwerk 25 ein, so dass jedem einzelnen IP-Node 11, 12, 13 innerhalb des lokalen Netzwerks eine eindeutige Port-Nummer des SNAT-Routers 24 zugeteilt wird. Auf diese Art werden die eingehenden Antwortdatenpakete jeweils an den richtigen IP-Node 21, 22, 23 weitergeleitet.

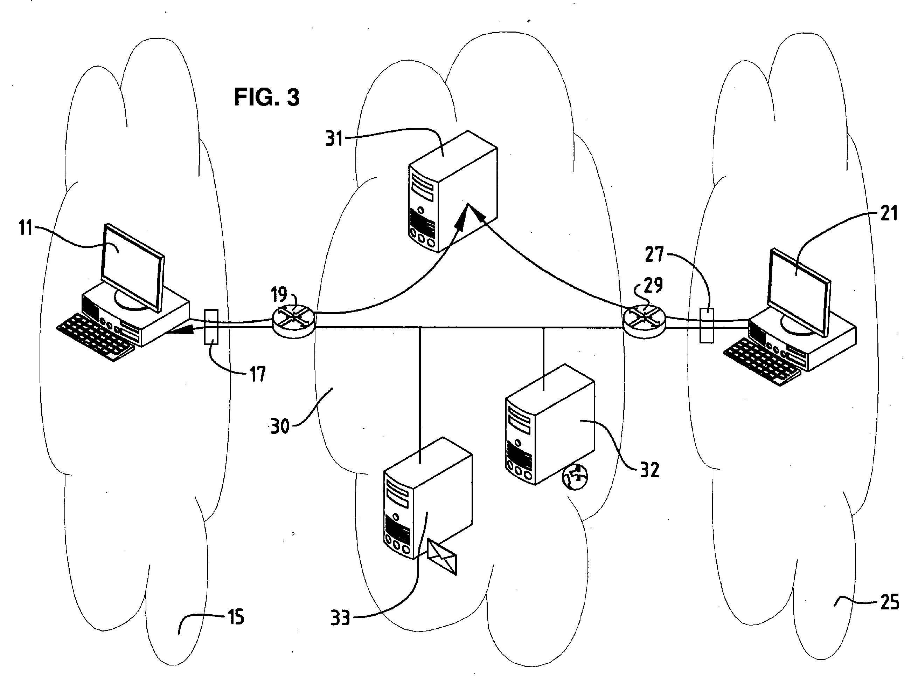

Figur 3 illustriert eine Architektur, die zur Realisierung der Erfindung verwendet werden kann. In der Figur 3 bezieht sich das Bezugszeichen 11 auf einen ersten IP-Node innerhalb eines ersten lokalen Netzwerks 15 und das Bezugszeichen 21 auf einen zweiten IP-Node innerhalb eines zweiten lokalen Netzwerks 25. Die IP-Nodes 11, 21 verfügen dabei über die notwendige Infrastruktur, einschliesslich Hardware- und Softwarekomponenten, um ein beschriebenes erfindungsgemässes Verfahren und/oder System zu realisieren, insbesondere um die Verbindungen untereinander über die vorhandenen Schnittstellen aufzubauen. Unter IP-Nodes 11, 21 sind unter anderem alle möglichen so genannten Customer Premise Equipment (CPE) zu verstehen, die zur Benutzung an verschiedenen Netzwerkstandorten und/oder verschiedenen Netzwerken vorgesehen sind. Diese IP-Nodes 11, 21 können mobil oder fix sein und beispielsweise Desktop-Computer, Handheld-Computer oder PDA (Personal Digital Assistant), Spielkonsolen oder Mobilfunkgeräte mit IP-Funktionalitäten sein. Die IP-Nodes 11, 12 können ein oder mehrere verschiedene Netzwerkschnittstellen besitzen, die auch mehrere unterschiedliche Netzwerkstandards unterstützen können. Die Netzwerkschnittstellen eines mobilen IP-Nodes 11, 21 können z.B. Schnittstellen zu Ethernet oder einem anderen Wired LAN (Local Area Network), Bluetooth, GSM (Global System for Mobile Communication), GPRS (Generalized Packet Radio Service), USSD (Unstructured Supplementary Services Data), UMTS (Universal Mobile Telecommunications System) und/oder WLAN (Wireless Local Area Network), xDSL (Digital Subscriber Line), IR (InfraRed), etc. umfassen.

Die Referenznummern 15 bzw. 25 stehen dementsprechend für die verschiedenen heterogenen Netzwerke, wie z.B. einem Wired LAN, d.h. einem lokalen Festnetz, insbesondere auch dem PSTN (Public Switched Telephone Network) etc., einem Bluetooth-Netzwerk, z.B. für Installationen in überdachten Örtlichkeiten, ein Mobilfunknetz mit GSM und/oder UMTS etc. oder einem Wireless LAN. Die Schnittstellen können nicht nur packet-switched Schnittstellen, wie sie von Netzwerkprotokollen wie z.B. Ethernet oder Token-Ring direkt benutzt werden, sondern auch circuit-switched Schnittstellen sein, welche circuit Schnittstellen mittels Protokollen, wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse, wie eine MAC- oder eine DLC-Adresse besitzen. Wie erwähnt, kann die Kommunikation z.B. auch über ein Mobilfunknetz wie GSM oder UMTS erfolgen, beispielsweise auch mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über einen Nutzkanal. Die Referenznummer 30 kann z.B. das gewohnte, weltweite IP-Backbone-Netzwerk bezeichnen.

In einem ersten Schritt registrieren sich die IP-Nodes 11, 21 bei der Zentraleinheit 31. Diese Registrierung dient dazu, jeweils die Verbindungsdaten jedes IP-Nodes 11, 21 in einer Lookup-Table 36 der Zentraleinheit 31 abzuspeichern. Insbesondere können in dieser Lookup-Table 36 die dem IP-Node 11, 21 zugeordnete IP-Nummer und Port-Nummer des entsprechenden NAT-Routers 17, 27 abgespeichert werden, über welche IP-Nummer und Port-Nummer der jeweilige IP-Node 11, 21 erreicht werden kann. Jeder IP-Node 11, 21 kann nämlich eine interne IP-Nummer bzw. Port-Nummer besitzen, über welche er aber nur innerhalb seines eigenen Netzwerks erreichbar ist. Für die IP-Nodes 11, 21 ausserhalb des eigenen Netzwerks ist der IP-Node 11, 21 nur über die ihm vom NAT-Router 17, 27 zugeteilte externe IP-Nummer bzw. Port-Nummer erreichbar. Es ist aber denkbar, andere Verbindungsdaten der IP-Nodes abzuspeichern, beispielsweise die so genannten Nicknames, Pseudonyme, URL-Adressen, usw. Des Weiteren können die IP-Nodes 11, 21 während des Registrationsprozesses die von ihnen angebotenen Dienste bekannt geben, und es können die internen IP- und/oder Port-Angaben für andere Layer (z.B. Applikationslayer) verkündet werden. Somit kann eine erste Überprüfung gemacht werden, bevor Verbindungs-Requests für nicht unterstützte Dienste weiter gegeben werden.

Die Registrierung dient weiter dazu, die aktiven IP-Nodes 11, 21 von den inaktiven IP-Nodes 11, 21 zu trennen, indem diese Registrierung beispielsweise periodisch wiederholt werden kann. Auch können bei der Registrierung Authentifizierungs- und/oder Verschlüsselungsverfahren verwendet werden, womit die Sicherheit der Kommunikationsverbindung erhöht werden kann. Als Authentifizierungsverfahren können alle gängigen Verfahren eingesetzt werden. Viele Authentifikationsmechanismen basieren auf RADIUS (Remote Authentication Dial-In User Service) der IETF (Internet Engineering Task Force). Die Benutzung des RADIUS Authentifizierungsprotokoll und Accountsystems ist weit verbreitet bei Netzwerkeinheiten, wie z.B. Router, Modemserver, Switch, etc. und wird von den meisten Internet Service Providern (ISP) benutzt. Wählt sich ein Benutzer beispielsweise bei einem ISP ein, muss er normalerweise einen Benutzernamen und ein Passwort eingeben. Der RADIUS-Server überprüft diese Information und autorisiert den Benutzer zum ISP-System. Der Grund für die Verbreitung von RADIUS liegt unter anderem darin, dass Netzwerkeinheiten im allgemeinen nicht mit einer sehr grossen Anzahl Netzbenutzer mit jeweils unterschiedlicher Authentifizierungsinformation umgehen können, da dies z.B. die Speicherkapazität der einzelnen Netzwerkeinheiten übersteigen würde. RADIUS erlaubt die zentrale Verwaltung von einer Vielzahl von Netzwerkbenutzern (Hinzufügen, Löschen von Benutzern, etc.). So ist das z.B. bei ISP (Internet Service Providern) eine notwendige Voraussetzung für ihren Dienst, da ihre Benutzeranzahl häufig mehrere tausend bis mehrere zehntausend Benutzer umfasst. RADIUS erzeugt weiter einen bestimmten permanenten Schutz vor Hackern. Die Remote-Authentifizierung von RADIUS basierend auf TACACS+ (Terminal Access Controller Access Control System+) und LDAP (Lightweight Directory Access Protocol) ist gegen Hacker relativ sicher. Viele andere Remote-Authentifizierungsprotokolle haben dagegen nur einen zeitweisen, ungenügenden oder gar keinen Schutz vor Hackerangriffen. Ein anderer Vorteil ist, dass RADIUS zur Zeit der de-facto Standard für Remote-Authentifizierung ist, womit RADIUS auch von fast allen Systemen unterstützt wird, was bei anderen Protokollen nicht der Fall ist. Zur Authentifizierung sind aber auch andere Protokolle und Mechanismen denkbar, insbesondere Zertifikate, welche von der Zentraleinheit 31 verwaltet und an die entsprechenden IP-Nodes 11, 21 abgegeben würden.

In einem zweiten Schritt will ein IP-Node 11, 21 einen Service von einem anderen IP-Node 11, 21 in Anspruch nehmen. Beispielsweise möchte sich ein Computer mit einem entsprechenden Webserver verbinden, um eine Webseite anzuzeigen. In diesem Sinne macht der erste IP-Node 11 einen Verbindungs-Request und übermittelt es an die Zentraleinheit 31. In diesem Verbindungs-Request teilt der erste IP-Node 11 der Zentraleinheit 31 den gewünschten Service (beispielsweise den World Wide Web) und die dem zweiten IP-Node 21 zugeordnete IP-Nummer des entsprechenden NAT-Routers 27 mit. Die Servicekennzeichnung kann als eine entsprechende Port-Nummer (zum Beispiel Port-Nummer 80 für den WWW) oder aus einer beliebigen Kennzeichnung definiert werden. Statt der dem IP-Node 11, 21 zugeordneten IP-Nummer kann auch eine andere Identifikation des IP-Nodes 11, 21 verwendet werden. Beispielsweise können die so genannten URL (Unified Resource Locator) oder URI (Unified Resource Identifier), oder eine andere beliebige eindeutige Identifikation des entsprechenden IP-Nodes 11, 21 verwendet werden. In diesem Fall muss ein entsprechender Zuweisungsmechanismus bei der Zentraleinheit 31 zur Verfügung gestellt werden, welcher diese besonderen Identifikationen der IP-Nodes 11, 21 in die entsprechende IP-Nummer umwandeln kann. Diese Dienste können beispielsweise von einem DNS-Server oder einem SIP-Registrar übernommen werden. Diese Dienste können in die Zentraleinheit integriert werden oder aber als selbständige Entitäten mit der Zentraleinheit verbunden werden.

In einem nächsten Schritt analysiert die Zentraleinheit 31 den Verbindungs-Request und führt eine Überprüfung dieses Verbindungs-Requests durch. Insbesondere prüft die Zentraleinheit 31, ob der Verbindungs-Request von einem registrierten, bzw. authentifizierten IP-Node 11, 21 stammt. Sollte der Verbindungs-Request von einem nicht zugelassenen IP-Node 11, 21 kommen, so wird der Verbindungs-Request nicht weiter behandelt. Durch diese Massnahme kann eine weitere Reduktion der Datenmenge im Netzwerk erreicht werden. Diese Überprüfung dient aber vor allem dazu, nur den autorisierten IP-Nodes 11, 21 den Zutritt zur Dienstleistung zu geben. Damit kann sichergestellt werden, dass nur die zugelassenen IP-Nodes 11, 21 Informationen über andere IP-Nodes 11, 21 erhalten können. Nicht zu vergessen in diesem Zusammenhang ist eine weitere Erhöhung der Kommunikationssicherheit und eine weitere Reduktion möglicher Attacken. Wenn sich die Zentraleinheit 31 versichert, dass der Verbindungs-Request von einem authentifizierten IP-Node 11, 21 stammt, ermittelt sie mittels der Lookup-Table 36 der Zentraleinheit 31 aus der übermittelten IP-Nummer des entsprechenden NAT-Routers 17, 27 die dem gewünschten IP-Node 11, 21 zugeordnete Port-Nummer, über welche der IP-Node 11, 21 erreicht werden kann.

Im nächsten Schritt teilt die Zentraleinheit 31 dem zweiten IP-Node 21 mit, dass der erste IP-Node 11 einen entsprechenden von ihm angebotenen Service in Anspruch nehmen würde. Dazu übermittelt die Zentraleinheit 31 die vom ersten IP-Node 11 erhaltene gewünschte Servicekennzeichnung an die dem zweiten IP-Node 21 zugeordnete IP-Nummer und Port-Nummer des zweiten NAT-Routers 27, über welche der zweite IP-Node 21 erreicht werden kann. Danach kann der zweite IP-Node 21 seinerseits eine Überprüfung durchführen und die entsprechende Serviceanfrage seitens des ersten IP-Nodes 11 akzeptieren oder ablehnen. Der zweite IP-Node 21 umfasst ein Konfigurationsmodul, mittels welchem im Falle einer positiven Überprüfung ein der Servicekennzeichnung zugeordneter Port des zweiten NAT-Routers 27 für die Übermittlung von IP-Paketen an einen Port des zweiten IP-Nodes 21 konfiguriert wird. Im Regelfall wird beispielsweise der zweite NAT-Router 27 so konfiguriert, dass beispielsweise die Anfragen für den WWW-Service von der externen Port-Nummer 80 des NAT-Routers 27 an die interne Port-Nummer 80 des zweiten IP-Nodes 21 weiter geleitet wird. Es ist aber auch eine Konstellation denkbar, bei welcher die Anfragen an eine externe Port-Nummer (beispielsweise 80 für den WWW) an eine andere interne Port-Nummer übermittelt werden (beispielsweise 8080 für einen anderen Webserver). Dieses Verfahren funktioniert auf die gleiche Art und Weise, wenn verschiedene IP-Nodes 11, 21 hinter dem gleichen NAT-Router 17, 27 dieselben Dienste anbieten möchten. In diesem Falle ist jedoch eine entsprechende Port-Umschreibung notwendig, so dass beispielsweise ein erster und ein zweiter Webserver unter derselben externen IP-Nummer aber verschiedenen externen Port-Nummern erreicht werden können (beispielsweise die Port-Nummer 2214 für den ersten und die Port-Nummer 2215 für den zweiten Webserver). Diese Informationen werden durch die Zentraleinheit 31 verwaltet.

Nach der erfolgten Zustimmung und einer erfolgreichen Konfiguration des NAT-Routers 27 teilt der zweite IP-Node 21 diese Zustimmung und die entsprechende Konfiguration dem ersten IP-Node 11 mit. Diese Mittelung kann einerseits mittels der Übermittlung einer Meldung vom zweiten IP-Node 21 an die Zentraleinheit 31 und eine anschliessende Übermittlung einer Meldung von der Zentraleinheit 31 an den ersten IP-Node 11 bestätigt werden. In diesem Fall wird für die Rückmeldung bzw. eine positive Antwort auf das Verbindungs-Request derselbe Weg gewählt wie für das Verbindungs-Request selbst. Bestehender Kommunikationskanal kann wieder verwendet werden, inklusive eventuelle Verschlüsselungs- und/oder Authentifizierungsmechanismen. Die Rückmeldung kann aber auch mittels der Übermittlung einer Meldung direkt vom zweiten IP-Node 21 an den ersten IP-Node 11 bestätigt werden. Allenfalls muss diese Bestätigung die entsprechende externe Port-Nummer des zweiten IP-Nodes 21 umfassen, so dass der erste IP-Node 11 anschliessend eine entsprechende Kommunikationsverbindung mit dem gewünschten Service aufbauen kann.

Selbstverständlich eignet sich dieses Verfahren auch für symmetrische Dienste, bei welchen bei der Konfiguration des zweiten NAT-Routers 27 auch eine analoge Konfiguration des ersten NAT-Routers 17 ausgelöst wird. Eine solche symmetrische Konfiguration ist insbesondere für VolP (Voice over IP) basierend auf SIP-Protokoll notwendig. SIP (Session Initiation Protocol) hat eine sehr leichte Struktur und ist stark am HTTP (Hypertext Transfer Protocol) angelehnt. Es ermöglicht den Aufbau einer Kommunikationssitzung zwischen zwei und mehr Teilnehmern. Es handelt es sich aber um ein reines Initiierungsprotokoll. Zum Datenaustausch verwenden SIP-basierte Telefonie- und/oder Bildtelefonie-Systeme andere Protokolle, insbesondere SDP (Session Description Protocol, IETF RFC 2327) und das RTP (Realtime Transport Protocol, IETF RFC 1889). SDP dient insbesondere dazu, die zwischen den Endpunkten zu verwendenden Audio- und/oder Video-Codecs, Transportprotokolle, usw. auszuhandeln. Aufgabe von RTP ist es, den Multimedia-Datenstrom (Audio, Video, Text usw.) zu transportieren, d.h. die Daten zu kodieren, in Pakete zu zerlegen und zu versenden. Kommunikations-Endpunkte in einem SIPbasierten System werden User Agents genannt. Unter einem User Agent Client (UAC) versteht man eine Komponente, die eine SIP-Anfrage (Request) initiiert, der User Agent Server (UAS) erwidert diese Anfrage mit einer Antwort (Response). Ein User Agent (UA) kann sowohl die Rolle des UAC als auch des UAS einnehmen. Requests, von welchen eine limitierte Anzahl gegeben ist, werden grundsätzlich durch Responses (rund hundert verschiedene) erwidert. Sie tragen lediglich Nummern zur Unterscheidung. Ein User Agent sendet eine SIP-Nachricht vorab an einen SIP-Proxy. Anhand der angegebenen Adresse entscheidet der Proxy, wohin die Nachricht geschickt werden muss und leitet sie weiter. Diese Proxies können grundsätzlich zustandslos (stateless) oder zustandsbehaftet (stateful) sein. Während Stateless Proxies Nachrichten lediglich weiterleiten und eigentlich nicht mitbekommen, dass beispielsweise ein Gespräch aufgebaut wird, können Stateful Proxies Aufgaben übernehmen, die beim Aufbau eines Gesprächs hilfreich sind. Eine der wichtigsten Aufgaben eines Stateful Proxy ist das Verteilen von Anrufen auf verschiedene Ziele: Beim so genannten "Sequential Forking" werden die möglichen Anrufziele nacheinander angewählt, beim "Parallel Forking" bekommen alle Destinationen gleichzeitig eine Nachricht. Eine weitere unerlässliche Komponente eines SIPbasierten Systems ist ein SIP-Registrar, bei welchem sich alle User Agents registrieren müssen. Diese logische Einheit führt eine Datenbank mit Informationen über die angemeldeten User Agents und lenkt Anfragen auf diese Ziele um. In der Regel sind Registrar und Proxy dasselbe Programm, welches die Umleitung intern regelt, ohne dass Nachrichten ausgetauscht werden müssen. Schliesslich umfasst ein SIP-basiertes System auch einen Redirect Server oder Gateway, der unter anderem die Verbindung zwischen dem IP-basierten Telefonie-Netzwerk und dem PSTN gewährleistet.

Wie oben bereits erwähnt wurde, wird der Fachmann verstehen, dass es verschiedene Möglichkeiten gibt die Abfolge der Registrierung, Generierung und Übermittlung von Verbindungs-Requests und Rückmeldungen, und Konfiguration von NAT-Routern 17, 27 auszuführen, ohne dabei von der Lehre der vorliegenden Erfindung abzuweichen.

## Patentansprüche

1. Verfahren zum dynamischen Konfigurieren eines zweiten NAT-Routers (27), wobei zur gemeinsamen Kommunikation ein erster (11) respektive ein zweiter IP-Node (21) über einen ersten (17) respektive über einen zweiten NAT-Router (27) auf ein IP-Netzwerk (30) zugreifen, und
in welchem sich der zweite IP-Node (21) mittels eines Registrierungs-Requests bei einer Zentraleinheit (31) registriert, wobei in einer Lookup-Table (36) der Zentraleinheit (31) die dem zweiten IP-Node (21) vom zweiten NAT-Router (27) zugeordnete IP-Nummer und Port-Nummer abgespeichert wird, **dadurch gekennzeichnet,**
**dass** der erste IP-Node (11) einen Verbindungs-Request, bestehend aus mindestens der dem zweiten IP-Node (21) vom zweiten NAT-Router (27) zugeordneten IP-Nummer und aus einer Servicekennzeichnung, an die Zentraleinheit (31) übermittelt,
**dass** die Zentraleinheit (31) mittels der Lookup-Table (36) aus der übermittelten IP-Nummer die dem zweiten IP-Node (21) zugeordnete Port-Nummer ermittelt,
**dass** die Zentraleinheit (31) mindestens die Servicekennzeichnung an die dem zweiten IP-Node (21) vom zweiten NAT-Router (27) zugeordnete IP-Nummer/Port-Nummer und somit an den zweiten IP-Node (21) übermittelt, und
**dass** mittels eines Konfigurationsmoduls des zweiten IP-Nodes (21) ein der Servicekennzeichnung zugeordneter Port des zweiten NAT-Routers (27) für die Übermittlung von IP-Paketen an einen Port des zweiten IP-Nodes (21) konfiguriert wird.

2. Verfahren nach Anspruch 1, **dadurch gekennzeichnet, dass** die Konfiguration des Ports des zweiten NAT-Routers (27) mittels der Übermittlung einer Meldung vom zweiten IP-Node (21) an die Zentraleinheit (31) und der Übermittlung einer Meldung von der Zentraleinheit (31) an den ersten IP-Node (11) bestätigt wird.

3. Verfahren nach Anspruch 1, **dadurch gekennzeichnet, dass** die Zentraleinheit (31) zusammen mit der Servicekennzeichnung die dem ersten IP-Node (11) vom ersten NAT-Router (17) zugeordnete IP-Nummer/Port-Nummer an den zweiten IP-Node (21) übermittelt, wobei die Konfiguration des Ports des zweiten NAT-Routers (27) mittels der Übermittlung einer.Meldung vom zweiten IP-Node (21) an den ersten IP-Node (11) bestätigt wird.

4. Verfahren nach einem der Ansprüche 1 bis 3, **dadurch gekennzeichnet, dass** der zweite IP-Node (21) bei der Konfiguration des Ports des zweiten NAT-Routers (27) eine analoge Konfiguration eines Ports des ersten NAT-Routers (17) auslöst.

5. Verfahren nach einem der Ansprüche 1 bis 4, **dadurch gekennzeichnet, dass** der Registrierungs-Request des ersten IP-Nodes (11) respektive des zweiten IP-Nodes (21) zu bestimmbaren Zeitpunkten oder nach Ablauf eines bestimmbaren Zeitintervalls wiederholt wird.

6. Verfahren nach einem der Ansprüche 1 bis 5, **dadurch gekennzeichnet, dass** statt der dem ersten (11) respektive dem zweiten IP-Node (21) zugeordneten IP-Nummer Einträge eines DNS-Servers verwendet werden oder in einem dynamischen DNS-Server abgespeichert werden.

7. Verfahren nach einem der Ansprüche 1 bis 6, **dadurch gekennzeichnet, dass** bei der Registrierung des ersten (11) respektive des zweiten IP-Nodes (21) ein Authentifizierungsverfahren verwendet wird.

8. Verfahren nach einem der Ansprüche 1 bis 7, **dadurch gekennzeichnet, dass** bei der Registrierung des ersten (11) respektive des zweiten IP-Nodes (21) ein Verschlüsselungsverfahren verwendet wird.

9. Verfahren nach einem der Ansprüche 1 bis 8, **dadurch gekennzeichnet, dass** bei der Kommunikation zwischen dem ersten (17) respektive dem zweiten NAT-Router (27) und der Zentraleinheit (31) Authentifizierungs- und/oder Verschlüsselungs-Verfahren verwendet werden.

10. Verfahren nach Anspruch 4, **dadurch gekennzeichnet, dass** zwischen dem ersten IP-Node (11) und dem zweiten IP-Node (21) eine VoIP-Verbindung oder eine Instant Messaging-Verbindung erstellt wird.

11. System zum dynamischen Konfigurieren eines zweiten NAT-Routers (27), wobei zur gemeinsamen Kommunikation ein erster (11) respektive ein zweiter IP-Node (21) über einen ersten (17) respektive über einen zweiten NAT-Router (27) auf ein IP-Netzwerk (30) zugreifen, umfassend
- eine Zentraleinheit (31) mit
. einem Kommunikationsmodul (38) zum Empfang von Registrierungs-Requests von IP-Nodes (11, 21) über das IP-Netzwerk (30) mit der dem IP-Node (11, 21) vom NAT-Router (17, 27) zugeordneten IP-Nummer und Port-Nummer,
. einer Lookup-Table (36) zur Speicherung der übermittelten den IP-Nodes (11, 21) zugeordneten IP-Nummern und Port-Nummern,
. einem Kommunikationsmodul (38) zum Empfang von Verbindungs-Requests von IP-Nodes (11, 21) über das IP-Netzwerk (30) mit mindestens der dem IP-Node (11, 21) vom NAT-Router (17, 27) zugeordneten IP-Nummer und einer Servicekennzeichnung,
. einem Analysemodul (37) zur Ermittlung der dem IP-Node (11, 21) zugeordneten Port-Nummer aus der übermittelten dem IP-Node (11, 21) vom NAT-Router (17, 27) zugeordneten IP-Nummer,
einem Kommunikationsmodul (38) zur Übermittlung von Verbindungs-Requests mit mindestens der übermittelten Servicekennzeichnung an die dem IP-Node (11, 21) vom NAT-Router (17, 27) zugeordnete IP-Nummer/- Port-Nummer und somit an den IP-Node (11, 21), sowie
- ein erster (11) und zweiter IP- Node (21) mit jeweils einem Konfigurationsmodul zum Konfigurieren eines der Servicekennzeichnung zugeordneten Ports des ersten (17) respektive des zweiten NAT-Routers (27) für die Übermittlung von IP-Paketen an einen Port des ersten (11) respektive des zweiten IP-Nodes (21).

12. System nach Anspruch 11, **dadurch gekennzeichnet, dass** die Zentraleinheit (31) ein Kommunikationsmodul (38) zur Übermittlung von Bestätigungsmeldungen an die IP-Nodes (11, 21) über das IP-Netzwerk (30) umfasst.

13. System nach einem der Ansprüche 11 oder 12, **dadurch gekennzeichnet, dass** die Zentraleinheit (31) ein Umwandlungsmodul (35) zur Umwandlung der Einträge eines DNS-Servers in eine dem ersten (11) respektive dem zweiten IP-Node (21) zugeordneten IP-Nummer umfasst.

14. System nach einem der Ansprüche 11 bis 13, **dadurch gekennzeichnet, dass** die Zentraleinheit ein Authentifizierungsmodul zur Authentifizierung des ersten (11) respektive des zweiten IP-Nodes (21) umfasst.

15. System nach einem der Ansprüche 11 bis 14, **dadurch gekennzeichnet, dass** die Zentraleinheit ein Verschlüsselungsmodul zur Verschlüsselung der Kommunikation zwischen der Vorrichtung und dem ersten (11) respektive dem zweiten IP-Node (21) und/oder dem ersten (17) respektive dem zweiten NAT-Router (27).

16. System nach einem der Ansprüche 11 bis 15, **dadurch gekennzeichnet, dass** das Konfigurationsmodul derart ausgestaltet ist, die Konfiguration des Ports des ersten (17) respektive des zweiten NAT-Routers (27) mittels der Übermittlung einer Meldung vom ersten (11) respektive vom zweiten IP-Node (21) an die Zentraleinheit (31), und die Zentraleinheit (31) derart ausgestaltet ist die Konfiguration des Ports mittels Übermittlung einer Meldung an den zweiten (21) respektive an den ersten IP-Node (11) zu bestätigen.

17. System nach einem der Ansprüche 11 bis 15, **dadurch gekennzeichnet, dass** die Zentraleinheit (31) derart ausgestaltet ist, zusammen mit der Servicekennzeichnung die IP-Nummer/Port-Nummer des zweiten (17) respektive des ersten NAT-Routers (17) an den ersten (11) respektive an den zweiten IP-Node (21) zu übermitteln, wobei erste (11) respektive der zweite IP-Node (21) derart ausgestaltet ist, die Konfiguration des Ports des ersten (17) respektive des zweiten NAT-Routers (27) mittels der Übermittlung einer Meldung an den zweiten (21) respektive an den ersten IP-Node (11) zu bestätigen.

## Claims

1. Method for dynamic configuration of a second NAT-router (27), a first (11) or respectively a second IP-node (21) accessing an IP-network (30) via a first (17) or respectively via a second NAT-router (27), for common communication, and
in which the second IP-node (21) registers itself with a central unit (31) by means of a registration request, the IP number and port number assigned to the second IP-node (21) by the second NAT-router (27) being stored in a lookup table (36) of the central unit (31), **characterised in**
**that** the first IP-node (11) transmits to the central unit (31) a connection request, comprising at least the IP number assigned to the second IP-node (21) by the second NAT-router (27) and a service designation,
**that** by means of the lookup table (36) the central unit (31) determines from the transmitted IP-number the port number assigned to the second IP-node (21),
**that** the central unit (31) transmits at least the service designation to the IP-number/port-number assigned to the second IP-node (21) by the second NAT-router (27) and thus to the second IP-node (21), and
**that** by means of a configuration module of the second IP-node (21) a port of the second NAT-router (27) assigned to the service designation is configured for the transmission of IP-packets to a port of the second IP-node (21).

2. Method according to claim 1, **characterised in that** the configuration of the port of the second NAT-router (27) is confirmed by means of the transmission of a message from the second IP-node (21) to the central unit (31) and the transmission of a message from the central unit (31) to the first IP-node (11).

3. Method according to claim 1, **characterised in that** the central unit (31) transmits to the second IP-node (21) together with the service designation the IP-number/port-number assigned to the first IP-node (11) by the first NAT-router (17), the configuration of the port of the second NAT-router (27) being confirmed by means of the transmission of a message from the second IP-node (21) to the first IP-node (11).

4. Method according to one of the claims 1 to 3, **characterised in that** with the configuration of the port of the second NAT-router (27) the second IP-node (21) triggers an analog configuration of a port of the first NAT-router (17).

5. Method according to one of the claims 1 to 4, **characterised in that** the registration request of the first IP-node (11) or respectively of the second IP-node (21) is repeated at definable points in time or after expiration of a definable time interval.

6. Method according to one of the claims 1 to 5, **characterised in that** instead of the IP number assigned to the first (11) or respectively the second IP-node (21) entries of a DNS-server are used or are stored in a dynamic DNS-server.

7. Method according to one of the claims 1 to 6, **characterised in that** an authentication method is used in the registration of the first (11) or respectively of the second IP-node (21).

8. Method according to one of the claims 1 to 7, **characterised in that** an encryption method is used in the registration of the first (11) or respectively of the second IP-node (21).

9. Method according to one of the claims 1 to 8, **characterised in that** authentication and/or encryption methods are used in the communication between the first (17) or respectively the second NAT-router (27) and the central unit (31).

10. Method according to claim 4, **characterised in that** VoIP-connection or an instant messaging-connection is established between the first IP-node (11) and the second IP-node (21).

11. System for dynamic configuration of a second NAT-router (27), a first (11) or respectively a second IP-node (21) accessing an IP-network (30) via a first (17) or respectively via a second NAT-router (27), for common communication, comprising
- a central unit (31) with
• a communication module (38) for receiving registration requests from IP-nodes (11, 21) via the IP-network (30) with the IP-number and port-number assigned to the IP-node (11, 21) by the NAT-router (17, 27),
• a lookup table (36) for storing the transmitted IP-numbers and port-numbers assigned to the IP-nodes (11, 21),
• a communication module (38) for receiving connection requests from IP-nodes (11, 21) via the IP-network (30) with at least the IP-number assigned to the IP-node (11, 21) by the NAT-router (17, 27) and a service designation,
• an analysis module (37) for determining the port-number assigned to the IP-node (11, 21) from the transmitted IP-number assigned to the IP-node (11, 21) by the NAT-router (17, 27),
• a communication module (38) for transmission of connection requests with at least the transmitted service designation to the IP-number/port-number assigned to the IP-node (11, 21) by the NAT-router (17, 27) and thereby the IP-node (11, 21), as well as
- a first (11) and second IP-node (21), each with a configuration module for configuration of a port of the first (17) or respectively of the second NAT router (27) assigned to the service designation for the transmission of IP-packets to a port of the first (11) or respectively of the second IP-node (21).

12. System according to claim 11, **characterised in that** the central unit (31) comprises a communication module (38) for transmission of confirmation messages to the IP-nodes (11, 21) via the IP network (30).

13. System according to one of the claims 11 or 12, **characterised in that** the central unit (31) comprises a conversion module (35) for converting the entries of a DNS server to an IP number assigned to the first (11) or respectively the second IP-node (21).

14. System according to one of the claims 11 to 13, **characterised in that** the central unit comprises an authentication module for authentication of the first (11) or respectively of the second IP-node (21).

15. System according to one of the claims 11 to 14, **characterised in that** the central unit <comprises> an encryption module for encryption of the communication between the device and the first (11) or respectively the second IP-node (21) and/or the first (17) or respectively the second NAT-router (27).

16. System according to one of the claims 11 to 15, **characterised in that** the configuration module is designed in such a way as to confirm the configuration of the port of the first (17) or respectively of the second NAT-router (27) by means of the transmission of a message from the first (11) or respectively from the second IP-node (21) to the central unit (31), and the central unit (31) is designed in such a way as to confirm the configuration of the port by means of transmission of a message to the second (21) or respectively to the first IP-node (11).

17. System according to one of the claims 11 to 15, **characterised in that** the central unit (31) is designed in such a way as to transmit together with the service designation the IP-number/port-number of the second (27) or respectively of the first NAT-router (17) to the first (11) or respectively to the second IP-node (21), the first (11) or respectively the second IP node (21) being designed in such a way as to confirm the configuration of the port of the first (17) or respectively of the second NAT-router (27) by means of the transmission of a message to the second (21) or respectively to the first IP-node (11).

## Revendications

1. Procédé pour la configuration dynamique d'un second routeur NAT (27), dans lequel un premier (11) ou respectivement un second noeud IP (21) accède à un réseau IP (30) à travers un premier (17) ou respectivement à travers un second routeur NAT (27) pour la communication commune, et
dans lequel ledit second noeud IP (21) s'enregistre auprès d'une unité centrale (31) moyennant une requête d'enregistrement, le numéro IP et le numéro de port assignés au dit second noeud IP (21) par ledit second routeur NAT (27) étant mémorisés dans une table de correspondance (36) de ladite unité centrale (31), **caractérisé en ce**
**que** ledit premier noeud IP (11) transmet à ladite unité centrale (31) une requête de connexion, comprenant au moins ledit numéro IP assigné au dit second noeud IP (21) par ledit second routeur NAT (27) et une désignation de service,
**que** moyennant ladite table de correspondance (36), ladite unité centrale (31) détermine, à partir dudit numéro IP transmis, le numéro de port assigné au dit second noeud IP (21),
**que** ladite unité centrale (31) transmet au moins ladite désignation de service au dit numéro IP / numéro de port assigné au dit second noeud IP (21) par ledit second routeur NAT (27) et ainsi qu'au dit second noeud IP (21), et
**que** moyennant un module de configuration dudit second noeud IP (21), un port dudit second routeur NAT (27) assigné à ladite désignation de service est configuré pour la transmission de paquets IP vers un port dudit second noeud IP (21).

2. Procédé selon la revendication 1, **caractérisé en ce que** la configuration du port dudit second routeur NAT (27) est confirmée moyennant la transmission d'un message à partir dudit second noeud IP (21) vers ladite unité centrale (31) et la transmission d'un message à partir de ladite unité centrale (31) vers ledit premier noeud IP (11).

3. Procédé selon la revendication 1, **caractérisé en ce que** ladite unité centrale (31) transmet au dit second noeud IP (21), ensemble avec la désignation de service, le numéro IP / numéro de port assigné au dit premier noeud IP (11) par ledit premier routeur NAT (17), la configuration du port dudit second routeur NAT (27) étant confirmée moyennant la transmission d'un message à partir dudit second noeud IP (21) vers ledit premier noeud IP (11).

4. Procédé selon l'une quelconque des revendications 1 à 3, **caractérisé en ce que** lors de la configuration du port dudit second routeur NAT (27), le second noeud IP (21) déclenche une configuration analogique d'un port dudit premier routeur NAT (17).

5. Procédé selon l'une quelconque des revendications 1 à 4, **caractérisé en ce que** la requête d'enregistrement dudit premier noeud IP (11) ou respectivement dudit second noeud IP (21) est répétée à des moments définissables ou après l'expiration d'un délai définissable.

6. Procédé selon l'une quelconque des revendications 1 à 5, **caractérisé en ce qu'**au lieu du numéro IP assigné au dit premier (11) ou respectivement second noeud IP (21), des données entrées dans un serveur DNS sont utilisées ou sont mémorisées dans un serveur DNS dynamique.

7. Procédé selon l'une quelconque des revendications 1 à 6, **caractérisé en ce qu'**une méthode d'authentification est utilisée dans l'enregistrement dudit premier (11) ou respectivement second noeud IP (21).

8. Procédé selon l'une quelconque des revendications 1 à 7, **caractérisé en ce qu'**une méthode de chiffrement est utilisée dans l'enregistrement dudit premier (11) ou respectivement second noeud IP (21).

9. Procédé selon l'une quelconque des revendications 1 à 8, **caractérisé en ce que** des méthodes d'authentication et/ou de chiffrement sont utilisées dans la communication entre ledit premier (17) ou respectivement second routeur NAT (27) et ladite unité centrale (31).

10. Procédé selon la revendication 4, **caractérisé en ce qu'**une connexion VoIP ou une connexion de messagerie instantanée est établie entre ledit premier noeud IP (11) et ledit second noeud IP (21).

11. Système pour la configuration dynamique d'un second routeur NAT (27), dans lequel un premier (11) ou respectivement un second noeud IP (21) accède à un réseau IP (30) à travers un premier (17) ou respectivement à travers un second routeur NAT (27) pour la communication commune, comprenant
- une unité centrale (31) avec
• un module de communication (38) pour recevoir des requêtes d'enregistrement à partir de noeuds IP (11, 21) à travers dudit réseau IP (30) avec le numéro IP et le numéro de port assignés au dit noeud IP (11, 21) par ledit routeur NAT (17, 27),
• une table de correspondance (36) pour mémoriser les numéros IP et numéros de port transmis et assignés aux dits noeuds IP (11, 21),
• un module de communication (38) pour recevoir des requêtes de connexion à partir de noeuds IP (11, 21) à travers dudit réseau IP (30) avec au moins le numéro IP assigné au dit noeud IP (11, 21) par ledit routeur NAT (17, 27) et une désignation de service,
• un module d'analyse (37) pour déterminer le numéro de port assigné au dit noeud IP (11, 21) à partir du numéro IP transmis et assigné au dit noeud IP (11, 21) par ledit routeur NAT (17, 27),
• un module de communication (38) pour la transmission de requêtes de connexion, avec au moins la désignation de service transmise, vers le numéro IP / le numéro de port assigné au dit noeud IP (11, 21) par ledit routeur NAT (17, 27) et ainsi que ledit noeud IP (11, 21), et
- un premier (11) et second noeud IP (21), chacun avec un module de configuration pour la configuration d'un port dudit premier (17) ou respectivement dudit second routeur NAT (27) assigné à la désignation de service pour la transmission de paquets IP vers un port dudit premier (11) ou respectivement dudit second noeud IP (21).

12. Système selon la revendication 11, **caractérisé en ce que** ladite unité centrale (31) comprend un module de communication (38) pour la transmission de messages de confirmation vers lesdits noeuds IP (11, 21) à travers ledit réseau IP (30).

13. Système selon l'une quelconque des revendications 11 ou 12, **caractérisé en ce que** ladite unité centrale (31) comprend un module de conversion (35) pour convertir les entrées d'un serveur DNS à un numéro IP assigné au dit premier (11) ou respectivement second noeud IP (21).

14. Système selon l'une quelconque des revendications 11 à 13, **caractérisé en ce que** ladite unité centrale comprend un module d'authentification pour l'authentification dudit premier (11) ou respectivement dudit second noeud IP (21).

15. Système selon l'une quelconque des revendications 11 à 14, **caractérisé en ce que** ladite unité centrale comprend un module de chiffrement pour le chiffrement de la communication entre ledit dispositif et ledit premier (11) ou respectivement ledit second noeud IP (21) et/ou ledit premier (17) ou respectivement ledit second routeur NAT (27).

16. Système selon l'une quelconque des revendications 11 à 15, **caractérisé en ce que** ledit module de configuration est conçu de manière à confirmer la configuration du port dudit premier (17) ou respectivement dudit second routeur NAT (27) moyennant la transmission d'un message à partir dudit premier (11) ou respectivement dudit second noeud IP (21) vers ladite unité centrale (31), et ladite unité centrale (31) est conçue de manière à confirmer la configuration du port moyennant la transmission d'un message vers ledit second (21) ou respectivement vers ledit premier noeud IP (11).

17. Système selon l'une quelconque des revendications 11 à 15, **caractérisé en ce que** ladite unité centrale (31) est conçue de manière à transmettre, conjointement avec la désignation de service, le numéro IP / le numéro de port dudit second (27) ou respectivement dudit premier routeur NAT (17) vers ledit premier (11) ou respectivement vers ledit second noeud IP (21), ledit premier (11) ou respectivement ledit second noeud IP (21) étant désigné de manière à confirmer la configuration du port dudit premier (17) ou respectivement dudit second routeur NAT (27) moyennant la transmission d'un message vers ledit second (21) ou respectivement vers ledit premier noeud IP (11).
